# EUROPEAN PATENT APPLICATION

(11) **EP 4 624 231 A1**
(43) Date of publication of application: **01.10.2025**
(21) Application number: 24167280.7
(22) Date of filing: 28.03.2024
(51) Int. Cl.: B60L 53/14, G01C 21/34, G08G 1/14, B60W 50/00, B60W 50/14

(54) **METHOD AND SYSTEM FOR NAVIGATION SUPPORT OF AN ELECTRIC VEHICLE TOWING A TRAILER**

(71) Applicant: Hyundai Motor Company, Seoul 06797 (KR); Kia Corporation, Seocho-gu Seoul 06797 (KR)
(72) Inventor: Lucas, Benjamin, 65451 Kelsterbach (DE); Cepeda, Alejandro, 60438 Frankfurt (DE); Schreiber, Michael, 60433 Frankfurt (DE)
(74) Representative: Isarpatent

(57) **Abstract**

A method for navigation support of an electric vehicle (EV) towing a trailer comprises specifying a destination for a planned trip with the EV via a navigation system of the EV; detecting, by a trailer detection device of the EV, that a trailer is connected to the EV; assessing, by the navigation system, charging stations along potential routes for the specified destination that are suitable for recharging the EV while the trailer is connected to the EV; and at least one of: indicating the suitable charging stations via the navigation system; and determining candidate routes for the planned trip by the navigation system based on the specified destination and the suitable charging stations.

## Description

### Technical field

The present invention pertains to a method and a system for navigation support of an electric vehicle towing a trailer as well as to an electric vehicle with such a system.

### Background

Electrification is an ongoing trend in the automotive sector and electric charging is often considered to be a crucial bottleneck in this respect. Charging an electric vehicle may become particularly challenging when towing a trailer. On the one hand, the electric range of the vehicle may be severely affected by the presence of the trailer. On the other hand, it may be difficult to find a suitable charging station and/or a suitable charging slot at a specific charging station as the trailer may extend the outer dimensions of the vehicle significantly, in particular in length direction, and common charging stations may not take into account such an increased space demand. Even considering that some charging stations may feature dedicated elongated charging slots for vehicles with trailers, it may be difficult for the user to know in advance about the actual situation at specific charging stations along a planned route. Having to decouple a trailer first to facilitate charging is inconvenient and may not be desirable for security reasons amongst others.

Prior art document DE 10 2016 212 071 B4 describes a method for operating an electrically driven vehicle, wherein the state of charge of an electric battery is optimized by predicting the recuperated energy during the next trip under consideration of the presence of a trailer. Amongst others, a brake force of the trailer is optimized to reach the best possible recuperation.

Prior art document DE 10 2021 204 100 A1 describes a method to improve energy and range prediction by taking trailer characteristics into account, which is eventually used to optimize route planning for the vehicle.

Some vehicles are able to automatically detect the presence of a trailer and can thus adapt their operation, in particular the battery management, as soon as this has happened. Document US 2016/0129803 A1 for example describes a method predicting the range of an electric vehicle comprising monitoring a trailer detecting means of the vehicle and determining a range value if the trailer detecting means detects that a trailer is currently attached to the vehicle.

### Disclosure of the invention

Hence, there is a need to find solutions for supporting electric vehicles with trailers in finding suitable charging opportunities.

To this end, the present invention provides a method in accordance with claim 1, a system in accordance with claim 6 and an electric vehicle in accordance with claim 11.

According to one aspect of the invention, a method for navigation support of an electric vehicle (EV) towing a trailer comprises specifying a destination for a planned trip with the EV via a navigation system of the EV; detecting, by a trailer detection device of the EV, that a trailer is connected to the EV; assessing, by the navigation system, charging stations along potential routes for the specified destination that are suitable for recharging the EV while the trailer is connected to the EV; and at least one of: indicating the suitable charging stations via the navigation system; and determining candidate routes for the planned trip by the navigation system based on the specified destination and the suitable charging stations.

According to another aspect of the invention, a system for navigation support of an EV towing a trailer comprises a trailer detection device configured to detect that a trailer is connected to the EV; and a navigation system configured to specify a destination for a planned trip with the EV, to assess charging stations along potential routes for the specified destination that are suitable for recharging the EV while the trailer is connected to the EV and at least one of: indicate the suitable charging stations; and determine candidate routes for the planned trip based on the specified destination and the suitable charging stations.

According to yet another aspect of the invention, an electric vehicle comprises a system according to the invention.

One idea of the present invention is to assist a vehicle operator in finding charging stations where the trailer will not have to be decoupled to be able to charge the vehicle. To this end, the invention indicates appropriate charging stations that are suitable for charging a vehicle with connected trailer. A charging station may be suitable in this regard, for example, because it has one or several charging slots with increased free space for vehicles with unusual length.

A trailer detection device is provided to determine whether a trailer is present and coupled to the vehicle. If this is the case, then the navigation system provides the operator with the relevant information about suitable charging stations and/or calculates recommended routes for the vehicle based on the locations of these charging stations.

For example, the trailer detection device may check whether a multi-pole electrical trailer connector or other such device is coupled to the trailer. The trailer detection device may receive feedback from the trailer via such a connector, for example a confirmation that the trailer is (correctly) coupled to the vehicle. In case of advanced connectors additional information may be transferred via the connection, e.g. control and/or monitoring data, trailer configuration data including information on the spatial extension and the weight of the trailer, etc.

However, a trailer detection device in the sense of the present invention may alternatively, or additionally, include sensor elements (e.g. one or several cameras etc.) installed on or at the vehicle that detect a coupled trailer at the back of the vehicle and may in addition determine its size or extensions.

Yet further, trailer detection systems can be employed that detect the trailer on basis of the changed driving behavior of the vehicle with trailer compared to without trailer. Typically, it takes these systems some time to detect a trailer on this basis, e.g. a few kilometers and/or some minutes of driving. In other words, these systems are often only able to detect the load of a trailer coupled to the vehicle sometime after the vehicle has started its trip.

It is understood that the term "vehicle" or "vehicular" or other similar term as used herein is inclusive of electric vehicles in general such as passenger automobiles including sports utility vehicles (SUV), buses, trucks, various commercial vehicles, and the like, and not only includes battery electric vehicles but also hybrid vehicles like plug-in hybrid electric vehicles and so on. As referred to herein, a hybrid vehicle is a vehicle that has two or more sources of power, for example both gasoline-powered and electric-powered vehicles.

Advantageous embodiments and improvements of the present invention are found in the subordinate claims.

According to an embodiment of the invention, the navigation system may consider trailer configuration data,
characterizing a size of the trailer, and/or charging station configuration data, specifying available parking space at the charging stations, when assessing suitable charging stations. A charging station may be considered suitable if the EV fits onto a charging slot of the respective charging station together with the trailer while the trailer is connected to the EV.

Hence, the system may take into account trailer characteristics like for example length, height, width, weight, number of axles and so on. Additionally, or alternatively, the system may also consider characteristics of each charging station, in particular the size of individual charging points/slots at each such station (in case there are several). It is to be understood that the system may consider various additional aspects of the charging stations like for example the number of charging slots, the charging capacity at each slot etc.

The trailer configuration data may be provided to the vehicle manually, e.g. by the operator, and/or automatically, e.g. from the trailer via an electronic trailer connector or via a wireless network after the type of trailer has been identified by the operator and/or the vehicle. In other embodiments, the trailer detection device may also acquire information on the trailer characteristics via sensor elements on the vehicle, for example.

Information on each charging station may be available in a data repository of and/or connected to the navigation system and/or may be provided online via a wireless network to the vehicle.

According to an embodiment of the invention, detecting may comprise determining that a device is connected to the EV at a tow hitch of the EV and excluding that the device is a bicycle carrier or similar equipment.

Hence, the system may double-check whether a trailer is actually connected or whether other devices are coupled to the vehicle that may not have a relevant impact on the required space at a charging station. A typical example of such a device is a bicycle carrier mountable to the tow hitch of the vehicle, which is typically not critical at charging stations as it does not require a significant amount of extra space at the back of the vehicle.

According to an embodiment of the invention, the method may further comprise wirelessly communicating, by a communication system of the EV, charging information after a successful charging process at a charging station with connected trailer indicating that the charging station is a suitable charging station. The system may thus comprise a correspondingly configured communication system.

Hence, a fleet of electric vehicles towing trailers may participate in order to continuously update the available information on the relevant charging stations and may share the information with the other vehicles and/or with a central repository.

According to an embodiment of the invention, the charging information may comprise trailer configuration data, characterizing a size of the trailer, and/or charging station configuration data, specifying available parking space at the charging station.

The invention will be explained in greater detail with reference to exemplary embodiments depicted in the drawings as appended.

### Brief description of the drawings

The accompanying drawings are included to provide a further understanding of the present invention and are incorporated in and constitute a part of this specification. The drawings illustrate the embodiments of the present invention and together with the description serve to explain the principles of the invention. Other embodiments of the present invention and many of the intended advantages of the present invention will be readily appreciated as they become better understood by reference to the following detailed description. The elements of the drawings are not necessarily to scale relative to each other. In the figures, like reference numerals denote like or functionally like components, unless indicated otherwise.
Fig. 1 schematically depicts an electric vehicle with a system for navigation support of the electric vehicle while towing a trailer according to an embodiment of the invention.
Fig. 2 schematically shows differently configured charging stations for recharging the electric vehicle of Fig. 1.
Fig. 3 schematically shows an exemplary route provided by the system of Fig. 1.
Fig. 4 shows a flow diagram of a method for navigation support of the electric vehicle of Fig. 1.

Although specific embodiments are illustrated and described herein, it will be appreciated by those of ordinary skill in the art that a variety of alternate and/or equivalent implementations may be substituted for the specific embodiments shown and described without departing from the scope of the present invention. Generally, this application is intended to cover any adaptations or variations of the specific embodiments discussed herein.

### Detailed description of the embodiments

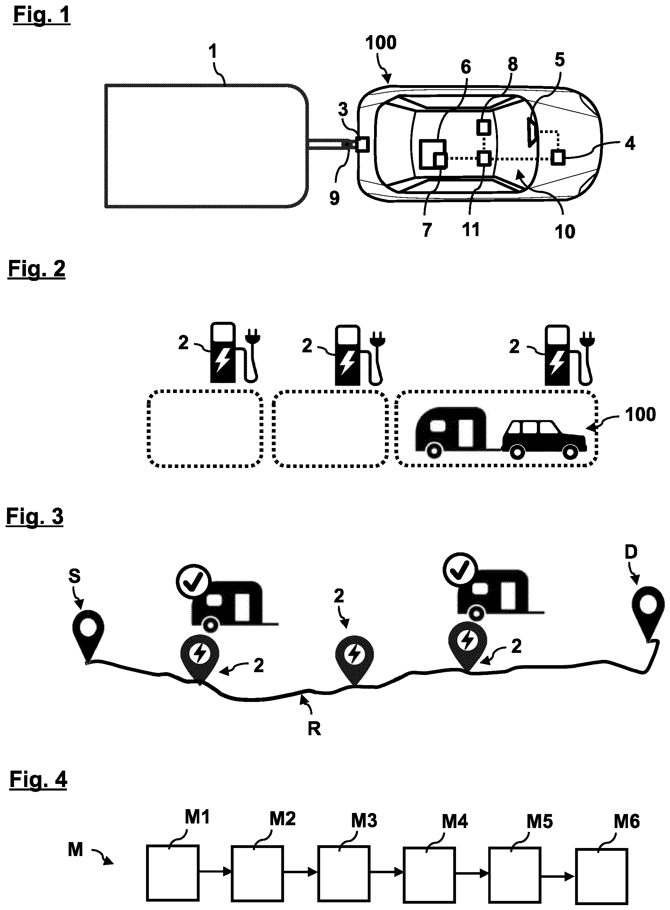

Figure 1 schematically depicts an electric vehicle 100 (EV) with a system 10 for navigation support of the EV 100 while towing a trailer 1 according to an embodiment of the invention. In the exemplary application of the system 10 as described in the following, the EV 100 tows a camping trailer. It is to be understood, however, that the system 10 can be applied in a similar vein to basically any kind of trailer that can be coupled to an electric vehicle.

Charging such an EV 100 with a hooked trailer 1 can be challenging as typical charging stations may not provide enough parking space at each charging slot for the EV 100 together with its trailer 1. If an operator decides to charge the EV 100 nonetheless, the trailer 1 may block the adjacent road/lane and/or may block other chargers/charging slots. Decoupling a trailer 1 in order to charge the EV 100 may be a security issue, e.g. a decoupled trailer 1 may get stolen during charging.

Even if some charging stations/slots work with trailers, the corresponding information may not be available to the drivers. Fig. 2 shows an exemplary arrangement of several charging stations 2. Two of these charging stations 2 do not offer enough free space for an EV 100 together with its trailer 1 (left and middle charging stations 2). Only the charging station 2 on the right hand side provides additional free space such that the EV 100 fits onto the charging slot together with its trailer 1. Hence, the EV 100 may be recharged without having to decouple the trailer 1 and without blocking the adjacent slots or road.

The present invention improves on the above situation by providing assistance to the vehicle operators to find suitable charging stations 2 where the trailer 1 does not need to be decoupled.

To this end, the present system 10 comprises a trailer detection device 3 configured to detect that a trailer 1 is connected to the EV 100.

For example, the trailer detection device 3 may be configured to check whether an electrical trailer connector is coupled to the trailer 1, e.g. it may check whether the respective multi-pole plug is connected between the EV 100 and the trailer 1.

In other examples, the trailer detection device 3 may also acquire information about a coupled trailer 1 by evaluating the driving behavior of the EV 100, which differs in case a trailer 1 is coupled to the vehicle and will depend on the type of trailer 1.

In yet further examples, the trailer detection device 3 may comprises one or several sensor elements installed on or at the EV 100 and configured to monitor the back of the EV 100, in particular the tow hitch 9, and determine whether a trailer 1 is coupled to the EV 100 and/or what type of trailer 1 it is.

In addition, the trailer detection device 3 may be configured to determine that a device is connected to the EV 100 at a tow hitch 9 of the EV 100 and to exclude that this device is a bicycle carrier or similar equipment for detecting that a trailer 1 is connected to the EV. Also to this end, the trailer detection device 3 may check whether a trailer connector is coupled or not and may rely on additional sensor data.

Coming back to Fig. 1, the system 10 further comprises a navigation system 4 configured to specify a destination D for a planned trip with the EV 100 and to assess charging stations 2 along potential routes R for the specified destination D that are suitable for recharging the EV 100 while the trailer 1 is connected to the EV 100.

To this end, the navigation system 4 is configured to consider trailer configuration data characterizing a size of the trailer 1, e.g. length, height, width, weight, number of axles etc. The information may be provided, for example, automatically to the EV 100 and its navigation system 4 when the trailer 1 is coupled to the EV 100 via an electronic trailer connector. Alternatively, or additionally, respective information may be entered manually into the system 4 by an operator of the EV 100 (it may be sufficient to type in the trailer model, based on this the system 4 may then acquire the size and other parameters of the trailer 1 from an online or offline data repository). Moreover, respective data may be provided by the trailer detection device 3, for example, based on acquired sensor data etc.

The navigation system 4 is further configured to consider charging station configuration data specifying available parking space at the charging stations 2. The charging station configuration data may thus particularly provide information on whether there is enough parking space at one or several charging slots at a charging station 2 for the EV 100 together with its coupled trailer 1. The respective information may be shared wirelessly with the navigation system 4 and may be continuously updated.

The navigation system 4 considers both the trailer configuration data and the charging station configuration data when assessing suitable charging stations 2. More specifically, a charging station 2 may be considered suitable if the EV 100 fits onto a charging slot of the respective charging station 2 together with the trailer 1 while the trailer 1 is connected to the EV.

The navigation system 4 is then further configured to indicate the suitable charging stations 2 to the vehicle operator (e.g. highlight the charging stations 2 with easy trailer access on a navigation map or show only the charging stations 2 with easy trailer access) and/or to determine one or several candidate routes R for the planned trip based on the specified destination D and the suitable charging stations 2.

Fig. 3 shows an exemplary case. The navigation system 4 optimizes a route R between a starting point S and a destination D by suggesting charging stations 2 where the vehicle operator does not have to decouple the trailer 1. In the depicted example, three charging stations 2 are situated along the route R of the EV 100, two of which are considered as suitable for charging with attached trailer 1 (the left and the right ones in Fig. 3). This information, as well as the route planning, may take into account the specific configuration of the trailer 1 actually coupled to the EV 100. Hence, the recommended route R, as well as the charging stations 2 considered to be suitable, may differ for different types of trailers 1.

Coming back to Fig. 1, the system 10 further comprises a communication system configured to wirelessly communicate charging information after a successful charging process at a charging station 2 with connected trailer 1 indicating that the charging station 2 is a suitable charging station.

In other words, the information on suitable charging stations 2 may be generated and continuously updated in an automatized fashion based on fleet intelligence. Each EV 100 with trailer 1 may send a message to a server if charging has been completed and whether it has been executed with or without decoupling the trailer 1. If many (e.g. 50+ %) of charging actions with hooked trailer 1 have been completed without decoupling, the respective charging station 2 or charging slot/point may be classified as "trailer friendly". The respective procedure may consider individual charging slots/points at each charging station 2 (if available) to take into account that not all charging points at one charging station 2 have the same available space and thus may not be configured identically.

Fig. 4 shows a corresponding method M for navigation support with the system 10 described above. The method M comprises under M1 specifying a destination D for a planned trip with the EV 100 via the navigation system 4. The method M further comprises under M2 detecting by the trailer detection device 3 that a trailer 1 is connected to the EV 100. The method M further comprises under M3 assessing by the navigation system 4 charging stations 2 along potential routes R for the specified destination D that are suitable for recharging the EV 100 while the trailer 1 is connected to the EV 100. The method M further comprises under M4 indicating the suitable charging stations 2 via the navigation system 4 and under M5 determining candidate routes R for the planned trip by the navigation system 4 based on the specified destination D and the suitable charging stations. Moreover, the method M comprises under M6 wirelessly communicating by the communication system charging information after a successful charging process at a charging station 2 with connected trailer 1 indicating that the charging station 2 is a suitable charging station 2.

It will be clear to the person of skill, that the present system 10 may also consider its knowledge about the coupled trailer 1 and its configuration into account to provide an improved and optimized control of the vehicle and in particular of its electric battery 6 (via a respective battery management system 7), as it is described, for example, in DE 10 2021 204 100 A1.

In the foregoing detailed description, various features are grouped together in one or more examples with the purpose of streamlining the disclosure. It is to be understood that the above description is intended to be illustrative, and not restrictive. It is intended to cover all alternatives, modifications and equivalents of the different features and embodiments. Many other examples will be apparent to one skilled in the art upon reviewing the above specification. The embodiments were chosen and described in order to explain the principles of the invention and its practical applications, to thereby enable others skilled in the art to utilize the invention and various embodiments with various modifications as are suited to the particular use contemplated.

### Reference List

- 1: trailer
- 2: charging station
- 3: trailer detection device
- 4: navigation system
- 5: user interface
- 6: electric battery
- 7: battery management system
- 8: communication system
- 9: tow hitch
- 10: system for navigation support
- 11: system control
- 100: electric vehicle
- S: start
- D: destination
- R: route
- M: method
- M1-M6: method steps

## Claims

1. Method (M) for navigation support of an electric vehicle, EV, (100) towing a trailer (1), the method (M) comprising:
specifying (M1) a destination (D) for a planned trip with the EV (100) via a navigation system (4) of the EV (100);
detecting (M2), by a trailer detection device (3) of the EV (100), that a trailer (1) is connected to the EV (100);
assessing (M3), by the navigation system (4), charging stations (2) along potential routes (R) for the specified destination (D) that are suitable for recharging the EV (100) while the trailer (1) is connected to the EV (100); and at least one of:
indicating (M4) the suitable charging stations (2) via the navigation system (4); and
determining (M5) candidate routes (R) for the planned trip by the navigation system (4) based on the specified destination (D) and the suitable charging stations (2).

2. Method (M) according to claim 1, wherein the navigation system (4) considers at least one of trailer configuration data, characterizing a size of the trailer (1), and charging station configuration data, specifying available parking space at the charging stations (2), when assessing suitable charging stations (2), wherein a charging station (2) is considered suitable if the EV (100) fits onto a charging slot of the respective charging station (2) together with the trailer (1) while the trailer (1) is connected to the EV (100) .

3. Method (M) according to claim 1 or 2, wherein detecting comprises:
determining that a device is connected to the EV at a tow hitch (9) of the EV (100); and
excluding that the device is a bicycle carrier or similar equipment.

4. Method (M) according to one of the claims 1 to 3, further comprising:
wirelessly communicating (M6), by a communication system of the EV (100), charging information after a successful charging process at a charging station (2) with connected trailer (1) indicating that the charging station (2) is a suitable charging station (2).

5. Method (M) according to claim 4, wherein the charging information comprises at least one of trailer configuration data, characterizing a size of the trailer (1), and charging station configuration data, specifying available parking space at the charging station (2).

6. System (10) for navigation support of an EV (100) towing a trailer (1), comprising:
a trailer detection device (3) configured to detect that a trailer (1) is connected to the EV (100); and
a navigation system (4) configured to specify a destination (D) for a planned trip with the EV (100), to assess charging stations (2) along potential routes (R) for the specified destination (D) that are suitable for recharging the EV (100) while the trailer (1) is connected to the EV (100) and at least one of:
indicate the suitable charging stations (2); and
determine candidate routes (R) for the planned trip based on the specified destination (D) and the suitable charging stations (2).

7. System (10) according to claim 6, wherein the navigation system (4) is configured to consider at least one of trailer configuration data, characterizing a size of the trailer (1), and charging station configuration data, specifying available parking space at the charging stations (2), when assessing suitable charging stations (2), wherein a charging station (2) is considered suitable if the EV (100) fits onto a charging slot of the respective charging station (2) together with the trailer (1) while the trailer (1) is connected to the EV (100).

8. System (10) according to claim 6 or 7, wherein the trailer detection device (3) is configured to determine that a device is connected to the EV (100) at a tow hitch (9) of the EV (100) and to exclude that the device is a bicycle carrier or similar equipment for detecting that a trailer (1) is connected to the EV (100).

9. System (10) according to one of the claims 6 to 8, further comprising:
a communication system configured to wirelessly communicate charging information after a successful charging process at a charging station (2) with connected trailer (1) indicating that the charging station (2) is a suitable charging station (2) .

10. System (10) according to claim 9, wherein the charging information comprises at least one of trailer configuration data, characterizing a size of the trailer (1), and charging station configuration data, specifying available parking space at the charging station (2).

11. Electric vehicle (10) with a system (10) according to one of the claims 6 to 10.
